# EUROPÄISCHE PATENTSCHRIFT

(11) **EP 0 801 092 B1**
(45) Veröffentlichungstag und Bekanntmachung des Hinweises auf die Patenterteilung: **03.12.2003**
(21) Anmeldenummer: 97105333.5
(22) Anmeldetag: 29.03.1997
(51) Int. Cl.: C08J 3/03, C09D 7/02, C09D 175/14, C08K 5/3435, C08K 5/353

(54) **Stabilisierte wässrige Dispersionen von Polyurethanen mit ethylenisch ungesättigten Gruppen**
Stabilized aqueous dispersions of polyurethanes having ethylenic unsaturated groups
Dispersions aqueuses de polyuréthanes stabilisés ayant des groupements insaturés éthyléniques

(30) Priorität: 09.04.1996 DE 19613994
(43) Veröffentlichungstag der Anmeldung: 15.10.1997
(73) Patentinhaber: BASF AKTIENGESELLSCHAFT, 67056 Ludwigshafen (DE)
(72) Erfinder: Häussling, Lukas, Dr., 67098 Bad Dürkheim (DE); Koch, Andreas, Dr., 67240 Bobenheim-Roxheim (DE); Lebkücher, Werner, 67159 Friedelsheim (DE)

(56) Entgegenhaltungen:
- EP-A- 0 449 912
- US-A- 5 412 047
- US-A- 5 468 789
- PATENT ABSTRACTS OF JAPAN vol. 098, no. 004, 31. März 1998 & JP 09 316026 A (MITSUBISHI CHEM CORP), 9. Dezember 1997
- CHEMICAL ABSTRACTS, vol. 84, no. 12, 22. März 1976 Columbus, Ohio, US; abstract no. 74872, MAKHONINA, L. I. ET AL: "Inhibition of radical polymerization of oligoester acrylates" XP002089360 & SU 478 838 A (INSTITUTE OF CHEMICAL PHYSICS, ACADEMY OF SCIENCES, U.S.S.R., USSR)

## Beschreibung

Die Erfindung betrifft wäßrige Dispersionen von Polyurethanen mit copolymerisierbaren, ethylenisch ungesättigten Gruppen, enthaltend einen Stabilisator, der mindestens eine in 2,2,6,6-Stellung durch eine C₁-C₆-Kohlenwasserstoffgruppe tetrasubstituierte Piperidin-N-oxyl-Gruppe, kurz N-Oxyl-Gruppe genannt, enthält.

Strahlungshärtbare Polyurethanacrylate werden gegen ungewollte Radikalbildung bzw. radikalische Vernetzungsreaktionen geschützt durch Radikalfänger oder auch Hydroperoxydzersetzer. Zu nennen sind beispielsweise 2,6-Di-tertiär-butyl-para-kresol oder auch Paramethoxyphenol und insbesondere Phenothiazin. Zusätzlich kommen noch Kupfer 2-Salze in Betracht, bzw. Phosphite und Phosphonite. Gelegentlich werden auch Thioether verwendet. Polymerisationsfähige Alkylradikale werden auch durch Protonenübertragung abgefangen und durch Bildung eines stabileren Radikales unschädlich gemacht. Derartige Stabilisatorkombinationen sind z.B. in EP-A-0449912 oder EP-A-0449913 beschrieben.

Bei wäßrigen Dispersionen von strahlungshärtbaren Polyurethanen, d.h. Polyurethanen mit ethylenisch ungesättigten Gruppen, kommt es bei längerer Lagerzeit zu Teilchenvergrößerungen und zur Bildung eines nicht wieder dispergierbaren Bodensatzes.

Auch bei Zusatz der oben genannten Stabilisatoren zu den wäßrigen Dispersionen wird keine genügende Langzeitstabilität erreicht, d.h. es kommt weiterhin zu einer deutlichen Teilchenvergrößerung und der Bildung eines Bodensatzes.

Aus der Patentanmeldung SU 478 838 ist die Verwendung der obigen Verbindung III als Inhibitor bei der thermischen, radikalischen Polymerisation bekannt. N-Oxyle sind auch z.B. aus US-A-4 665 185 und DE-A-42 19 459 bekannt.

Aufgabe der Erfindung waren daher wäßrige Dispersionen von Polyurethanen mit copolymerisierbaren, ethylenisch ungesättigten Gruppen, welche möglichst lange stabil sind, d.h. bei denen es nicht oder nur sehr langsam zu einer Vergrößerung der dispergierten Polymerteilchen und zur Bildung eines Bodensatzes kommt.

Demgemäß wurden die eingangs definierten wäßrigen Dispersionen gefunden.

Bei den Polyurethanen, welche in den Dispersionen dispergiert sind, handelt es sich insbesondere um Polyurethan(meth)acrylate.

Die Polyurethane können mit Hilfe von Emulgatoren oder Schutzkolloiden in der wäßrigen Phase dispergiert vorliegen.

Bevorzugt handelt es sich jedoch um Polyurethane, die selbst dispergierbar sind, d.h. welche durch einen Gehalt von chemisch gebundenen hydrophilen Gruppen, welche ionisch oder nicht-ionisch sein können, in Wasser dispergierbar sind.

Nicht-ionische Gruppen sind z.B. Polyalkylenoxid-, insbesondere Polyethylen- oder Polypropylenoxidgruppen.

Ionische Gruppen sind z.B. Carbonsäure-, Sulfonsäure- oder tertiäre Aminogruppen, welche bei oder vor der Dispergierung in Wasser in ihre Salzform überführt werden.

Die Polyurethane enthalten copolymerisierbare, ethylenisch ungesättigte Gruppen.

Ihr Gehalt beträgt, vorzugsweise 0,005 bis 0,5 Mol, bevorzugt 0,05 bis 0,4 pro 100 g Polymer.

Aufbaukomponenten der Polyurethan(meth)acrylate sind z.B.
a) Polyisocyanate, insbesondere Diisocyanate
b) Polyole, insbesondere Diole, mit einem Molekulargewicht über 500 bis 10,000 g/mol
c) kurzkettige Verbindungen mit einem Molekulargewicht unter 500 g/mol und mit mindestens 2 gegenüber Isocyanat reaktiven Gruppen (Kettenverlängerer)
d) Verbindungen mit mindestens einer gegenüber Isocyanat reaktiven Gruppe, welche eine hydrophile, nicht-ionische oder vorzugsweise ionische Gruppe zur Gewährleistung der Dispergierfähigkeit in Wasser enthalten
e) Verbindungen mit mindestens einer gegenüber Isocyanat reaktiven Gruppe und einer ethylenisch ungesättigten Gruppe (z.B. Hydroxyalkyl(meth)acrylate)

Gegenüber Isocyanat reaktive Gruppen sind insbesondere Hydroxylgruppen, primäre oder sekundäre Aminogruppen.

Die erfindungsgemäßen Dispersionen enthalten den obigen Stabilisator. Der Stabilisator kann den Dispersionen nachträglich zugesetzt werden. Vorzugsweise wird er jedoch schon bei bzw. vor der Herstellung der Polyurethane den Ausgangskomponenten zugesetzt.

Die Dispersionen enthalten vorzugsweise 0,001 bis 0,5 Gew.%, besonders bevorzugt 0,002 bis 0,1 Gew.% und ganz besonders bevorzugt 0,004 bis 0,05 Gew.% des Stabilisators, bezogen auf die Polyurethane.

Bevorzugt enthält der Stabilisator 1 bis 12, besonders bevorzugt 1 bis 4 der oben definierten N-Oxyl-Gruppen. Das Molgewicht des Stabilisators liegt vorzugsweise unter 3000 und besonders bevorzugt unter 800 g/mol.

Die beschriebenen Nitroxylverbindungen lassen sich aus den entsprechenden Piperidinverbindungen durch Oxidation z.B. mit Wasserstoffperoxid herstellen. Details zu dieser Oxidation sind z.B. in der älteren deutschen Patentanmeldung DE-A1 195 101 84 genannt. Die Piperidinverbindungen und ihre Herstellung sind allgemein bekannt. Da die Oxidationsreaktionen nicht immer vollständig ablaufen, können auch die als Ausgangsverbindungen dienenden Piperidinverbindungen sowie teilweise oxidierte Zwischenstufen in dem erfindungsgemäßen wäßrigen Dispersionen enthalten sein.

Bevorzugt handelt es sich um einen Stabilisator der allgemeinen Formel 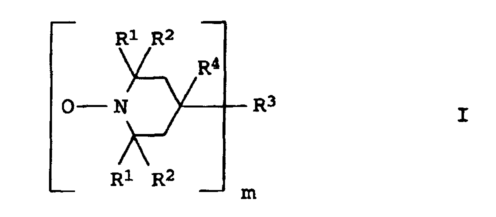 wobei
- m:: eine ganze Zahl von 1 bis 100
- R¹, R²:: C₁-C₄-Alkyl, Phenyl oder gemeinsam mit dem C-Atom, an das sie gebunden sind, einen 5- oder 6-gliedrigen gesättigten Kohlenwasserstoffring,
- R³:: Wasserstoff, eine Hydroxylgruppe, eine primäre Aminogruppe oder einen m-wertigen über Sauerstoff oder Stickstoff gebundenen organischen Rest,
- R⁴:: Wasserstoff, eine C₁-C₁₂-Alkyl- oder eine C₁-C₁₂-Alkoxygruppe
bedeuten können oder
- m =: 1 ist und
- R³ und R⁴: zusammen für eine Ketogruppe (=O) stehen oder
- R³ und R⁴: zusammen mit dem C-Atom, an das sie gebunden sind, eine Ringstruktur der Formel II 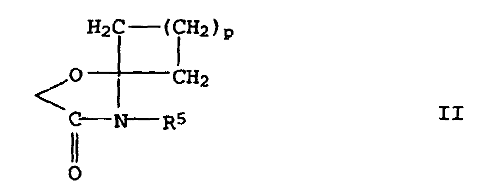 oder der Formel III 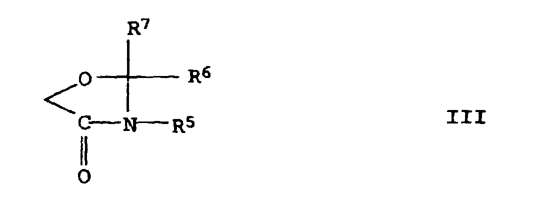 oder der Formel IV 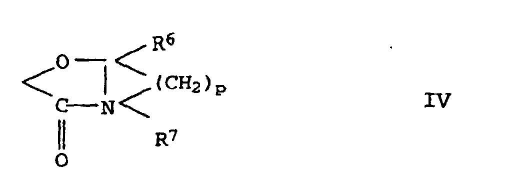 bilden, wobei
- R⁵: Wasserstoff, C₁-C₁₂-Alkyl oder -(CH₂)ₙ-COOR⁸,
- R⁶,R⁷,R⁸: unabhängig voneinander eine C₁-C₁₈-Alkylgruppe oder ein H-Atom,
- n, p: unabhängig voneinander eine ganze Zahl von 1 bis 12
bedeuten.

Bevorzugt haben die Variablen in Formel I folgende Bedeutung:
- m:: eine ganze Zahl von 1 bis 10, insbesondere 1 oder 2, besonders bevorzugt ist m = 1
- R¹, R²:: eine Methylgruppe
- R³:: Im Falle m = 1 steht R³ insbesondere für Wasserstoff, eine Hydroxylgruppe, eine primäre Aminogruppe oder auch für eine C₁-C₂₀-Alkoxygruppe, eine C₁-C₂₀-Carboxylatgruppe, eine sekundäre Aminogruppe NHR', eine tertiäre Aminogruppe NR'R" oder eine Ammoniumgruppe ^{⊕}NR'R"R'''X^{^{⊖}}, worin R' bis R"' unabhängig voneinander für einen organischen Rest insbesondere einen Kohlenwasserstoffrest mit bis zu 20 C-Atomen, z.B. für einen C₁-C₁₂-Alkyl- oder einen Phenylrest stehen und X^{^{⊖}} ein Gegenion, z.B. ein Halogenid bedeutet,
im Falle m > 1 kann R³ z.B. eine der folgenden Bedeutungen haben: 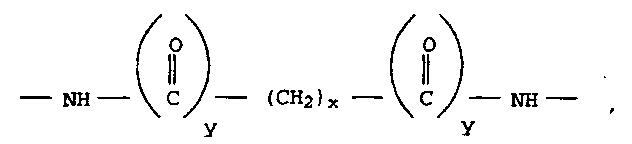 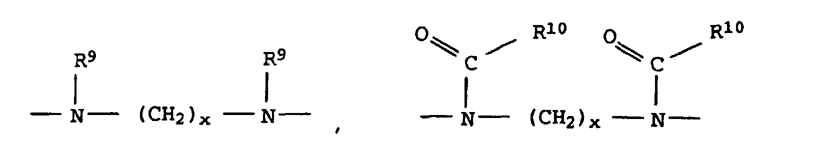 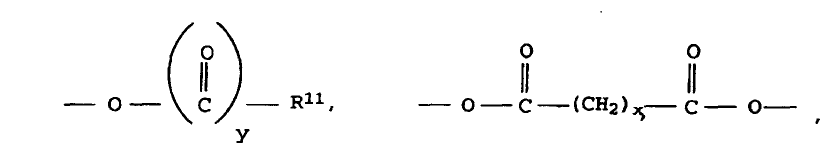 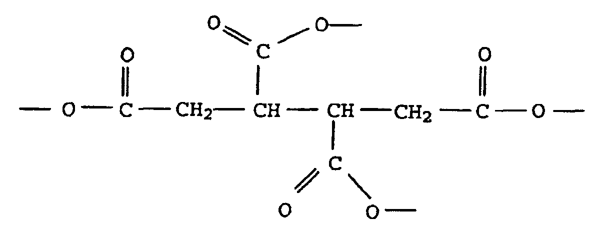 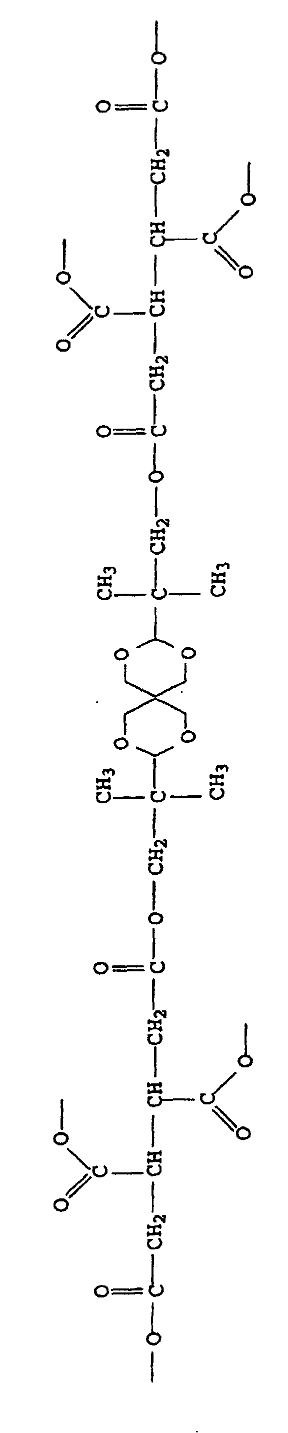 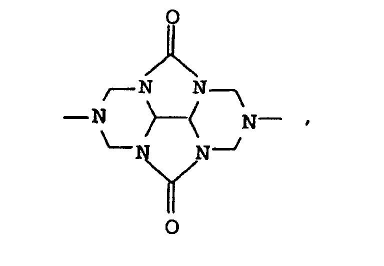 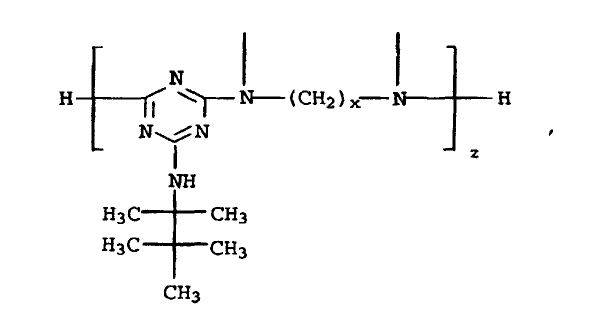 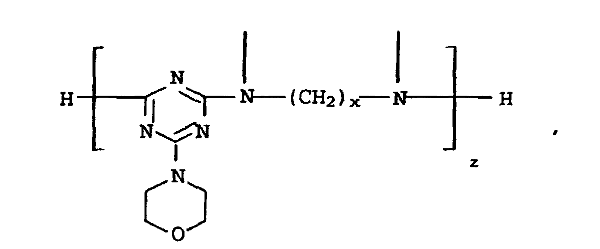 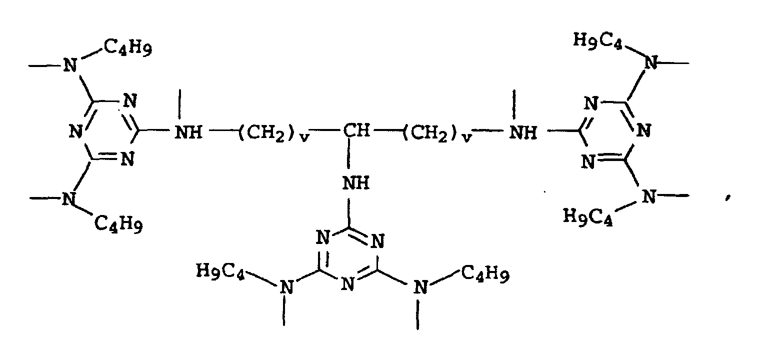 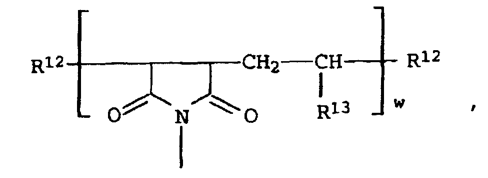 wobei
- R⁹: C₁-C₁₂-Alkyl oder -(CH₂)_{z}-COOR⁶ (R⁶ hat die oben genannte Bedeutung)
- R¹⁰: Wasserstoff oder C₁-C₁₈-Alkyl,
- R¹¹: C₁-C₁₈-Alkyl, Vinyl oder Isopropenyl,
- R¹²: Wasserstoff oder einen organischen Rest, wie er bei der radikalischen Polymerisation der Ausgangsmonomeren üblicherweise entsteht,
- R¹³: C₈-C₂₂-Alkyl,
- y: 0 oder 1,
- x: 1 bis 12 und
- z: 1 - 50 und
- w: 1 - 50 und
- v: 0 - 20
bedeuten.

Im Falle m > 1 steht R³ insbesondere für einen m-wertigen, organischen Rest mit bis zu 100, vorzugsweise bis zu 50 C-Atomen, z. B. auch für einen Kohlenwasserstoffrest oder einen Polycarboxylatrest.

Ebenfalls bevorzugt steht R³ für eine Gruppe der Formel 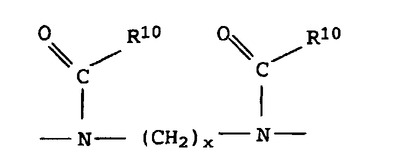
- R⁴: steht bevorzugt für ein Wasserstoffatom.

Besonders bevorzugt sind Stabilisatoren mit einer oder mehreren Hydroxyl- oder primären oder sekundären Aminogruppen.

Ganz besonders bevorzugt handelt es sich um einen Stabilisator der Formel 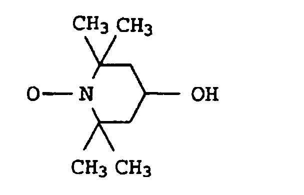 der als Hydroxy-TEMPO (4-Hydroxy-2,2,6,6-tetramethylpiperidin) erhältlich ist.

Als besonders geeignete Stabilisatoren seien auch die folgenden genannt:
1-Oxyl-2,2,6,6-tetramethylpiperidin,
1-Oxyl-2,2,6,6-tetramethylpiperidin-4-on,
1-Oxyl-2,2,6,6-tetramethylpiperidin-4-yl-acetat,
1-Oxyl-2,2,6,6-tetramethylpiperidin-4-yl-2-ethylhexanoat,
1-Oxyl-2,2,6,6-tetramethylpiperidin-4-yl-stearat,
1-Oxyl-2,2,6,6-tetramethylpiperidin-4-yl-benzoat,
1-Oxyl-2,2,6,6-tetramethylpiperidin-4-yl-(4-tert-butyl)benzoat,
Bis(1-oxyl-2,2,6,6-tetramethylpiperidin-4-yl)-succinat,
Bis(1-oxyl-2,2,6,6-tetramethylpiperidin-4-yl)-adipat,
Bis(1-oxyl-2,2,6,6-tetramethylpiperidin-4-yl)-sebacat,
Bis(1-oxyl-2,2,6,6-tetramethylpiperidin-4-yl)-n-butylmalonat,
Bis(1-oxyl-2,2,6,6-tetramethylpiperidin-4-yl)phthalat,
Bis(1-oxyl-2,2,6,6-tetramethylpiperidin-4-yl)-isophthalat,
Bis(1-oxyl-2,2,6,6-tetramethylpiperidin-4-yl)-terephthalat,
Bis(1-oxyl-2,2,6,6-tetramethylpiperidin-4-yl)-hexyhydroterephthalat,
N,N'-Bis(1-oxyl-2,2,6,6-tetramethylpiperidin-4-yl)-adipinamid,
N-(1-Oxyl-2,2,6,6-tetramethylpiperidin-4-yl)-caprolactam,
N-(1-Oxyl-2,2,6,6-tetramethylpiperidin-4-yl)-dodecylsuccinimid,
2,4,6-Tris-[N-butyl-N-(1-oxyl-2,2,6,6,-tetramethylpiperidin-4-yl]-s-triazin und
4,4'-Ethylenbis(1-oxyl-2,2,6,6-tetramethylpiperazin-3-on).

Die erfindungsgemäßen Dispersionen können natürlich neben dem Stabilisator, der mindestens eine in 2,2,6,6-Stellung durch einen C₁-C₆-Kohlenwasserstoffrest tetrasubstituierte Piperidin-N-oxyl-Gruppe enthält, noch weitere Stabilisatoren enthalten.

Genannt seinen z.B. 2,2,6,6-Tetraalkylpiperidine, welche keine N-Oxyl-Gruppe enthalten oder Costabilisatoren aus der Gruppe der Hydroxylamine, der aromatischen Nitro- oder Nitrosoverbindungen, der substituierten Phenole, vor allem solche mit Alkyl- oder Alkoxysubstituenten, Phenothiazine, Chinone, Kupfer 2-Salze, Phosphite, Phosphonite, Thioether oder Phenylendiamine oder Mischungen dieser Verbindungen.

Die erfindungsgemäßen Dispersionen sind lange Zeit, über Monate und Jahre stabil. In dieser Zeit tritt allenfalls nur eine geringe Vergrößerung der dispergierten Teilchen auf und die Bildung eines Bodensatzes ist kaum zu beobachten.

Die erfindungsgemäßen Dispersionen werden insbesondere zur Herstellung von Beschichtungen, welche durch Bestrahlen mit energiereichem Licht gehärtet werden, verwendet und können weitere Zusatzstoffe, z.B. Photoinitiatoren für die Strahlungshärtung, enthalten. Die Reaktivität der Polyurethane bei der Strahlungshärtung wird durch die Gegenwart des Stabilisators I nicht bzw. kaum beeinträchtigt.

### Beispiel

### Herstellung der Polyurethanacrylatdispersion

In einem Reaktor werden die Hydroxylkomponenten und zwar Butandiol, Polyesterdiol und Hydroxyethylacrylat vorgelegt, gemeinsam mit Tempol (Menge 0,01 Gew.-%, bezogen auf alle Ausgangskomponenten des Polyurethans) und die Isocyanatkomponente, Isophorondiisocyanat und trimeres Hexamethylendiisocyanat zugegeben, so daß die entstehende Reaktionswärme gut abgeführt werden kann. Bei Erreichen eines Isocyanatgehaltes von 2% wird die Dispersion mit einer wäßrigen Lösung von PUD-Salz (Addukt von Acrylsäure an Alkylendiamin 1:1) versetzt und anschließend nach einer Reaktionszeit von 15 min. 60 Gew.-Teile Wasser (bezogen auf 40 Gew.-Teile Polyurethan) Wasser zugegeben. Die Temperatur wird nun erhöht und das Aceton unter Vakuum aus dem Reaktionsgefäß abdestilliert. Die zunächst wäßrig acetonische Lösung des Polyurethanacrylates wird unter zunehmendem Acetonverlust höherviskos und schließlich in eine wäßrige Dispersion umgewandelt.

### Vergleichsbeispiel

Im Vergleichsbeispiel wurde statt Tempol Phenothiazin (Gewichtsmenge 0,01 Gew.-%) verwendet.

### Prüfung der Langzeitstabilität

Die Teilchengröße (in nm) wurde mit fortwährender Lagerzeit bestimmt. Die Lagertemperatur war 60°C.

| Lagerzeit (Tage) | Vergleichsbeispiel | Beispiel |
|---|---|---|
| 0 | 82,0 | 75,0 |
| 2 | 134,0 | 107,0 |
| 4 | 148,5 | 110,4 |
| 8 | 155,8 | 112,3 |
| 15 | 186,5 | 118,2 |
| 30 | 198,1 | 120,0 |
| 52 | 204,5 | 146,2 |
| 72 | 208,1 | 169,2 |
| 90 | 232,5 | 195,2 |

## Patentansprüche

1. Wäßrige Dispersionen von Polyurethanen mit copolymerisierbaren, ethylenisch ungesättigten Gruppen, enthaltend einen Stabilisator, der mindestens eine in 2,2,6,6-Stellung durch eine C₁-C₆-Kohlenwasserstoffgruppe tetrasubstituierte Piperidin-N-oxyl-Gruppe enthält.

2. Wäßrige Dispersion gemäß Anspruch 1, **dadurch gekennzeichnet, daß** es sich bei dem Stabilisator um eine Verbindung oder eine Mischung von Verbindungen der allgemeinen Formel I 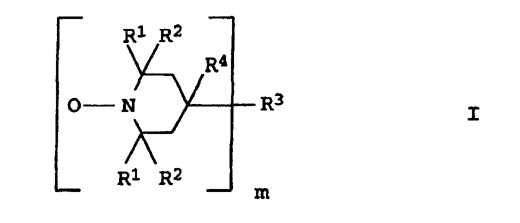 handelt, wobei
m: eine ganze Zahl von 1 bis 100
R¹, R²: C₁-C₄-Alkyl, Phenyl oder gemeinsam mit dem C-Atom, an das sie gebunden sind, einen 5- oder 6-gliedrigen gesättigten Kohlenwasserstoffring,
R³: Wasserstoff, eine Hydroxylgruppe, eine primäre Aminogruppe oder einen m-wertigen über Sauerstoff oder Stickstoff gebundenen organischen Rest,
R⁴: Wasserstoff, eine C₁-C₁₂-Alkyl- oder eine C₁-C₁₂-Alkoxygruppe
bedeuten können oder
m = 1 ist und
R³ und R⁴ zusammen für eine Ketogruppe (=O) stehen oder
R³ und R⁴ zusammen mit dem C-Atom, an das sie gebunden sind, eine Ringstruktur der Formel II 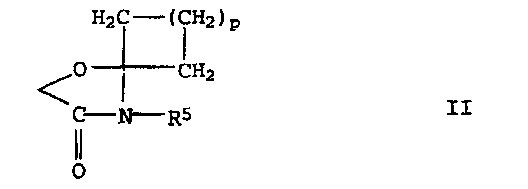 oder der Formel III 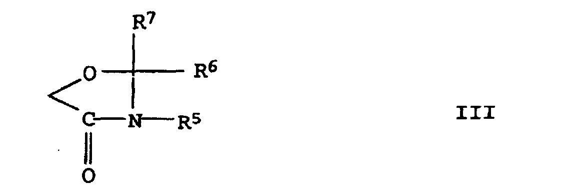 oder der Formel IV 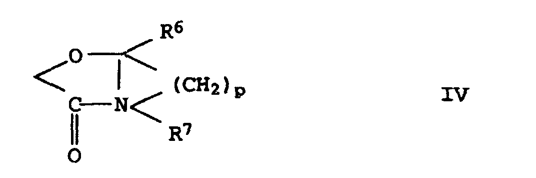 bilden, wobei
R⁵ Wasserstoff, C₁-C₁₂-Alkyl oder -(CH₂)ₙ-COOR⁸,
R⁶,R⁷,R⁸ unabhängig voneinander eine C₁-C₁₈-Alkylgruppe oder ein H-Atom,
n, p unabhängig voneinander eine ganze Zahl von 1 bis 12
bedeuten.

3. Wäßrige Dispersion gemäß Anspruch 2, **dadurch gekennzeichnet, daß** es sich bei dem Stabilisator um eine Verbindung der Formel 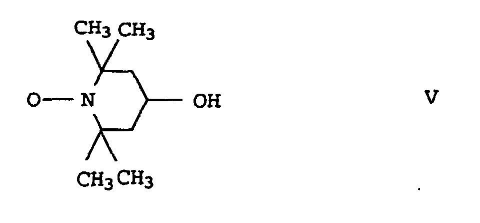 handelt.

4. Wäßrige Dispersionen gemäß einem der Ansprüche 1 bis 3, enthaltend 0,001 bis 0,5 Gew.%, bezogen auf die Verbindungen, des Stabilisators.

5. Wäßrige Dispersionen gemäß einem der Ansprüche 1-4, wobei der Gehalt an ethylenisch ungesättigten Gruppen in den Polyurethanen 0,005 bis 0,4 Mol pro 100 g Polyurethan beträgt.

6. Wässrige Dispersionen gemäß einem der vorstehenden Ansprüche, wobei es sich bei den Polyurethanen mit copolymerisierbaren, ethylenisch ungesättigten Gruppen um Polyurethan(meth)-acrylate handelt.

7. Verwendung eines Stabilisators, der mindestens eine in 2,2,6,6-Stellung durch eine C₁-C₆-Kohlenwasserstoffgruppe tetrasubstituierte Piperidin-N-oxyl-Gruppe enthält,
zur Stabilisierung von wäßrigen Dispersionen von Polyurethanen mit copolymerisierbaren, ethylenisch ungesättigten Gruppen.

## Claims

1. An aqueous dispersion of compounds having copolymerizable ethylenically unsaturated groups, comprising a stabilizer which contains at least one piperidine-N-oxyl group that is 2,2,6,6-tetrasubstituted by a C₁-C₆ hydrocarbon group.

2. An aqueous dispersion as claimed in claim 1, wherein the stabilizer is a compound or mixture of compounds of the formula I 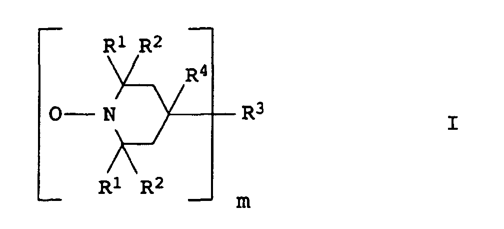 where
m: can be an integer from 1 to 100
R¹ and R²: can be C₁-C₄-alkyl, phenyl or, together with the carbon to which they are attached, can be a 5- or 6-membered saturated hydrocarbon ring,
R³: can be hydrogen, hydroxyl, primary amino or an m-valent organic radical attached by oxygen or nitrogen, and,
R⁴: can be hydrogen, C₁-C₁₂-alkyl or C₁-C₁₂-alkoxy,
or
m = is 1 and
R³ and R⁴ together are keto (=O) or
R³ and R⁴ together with the carbon to which they are attached, form a ring structure of the formula II 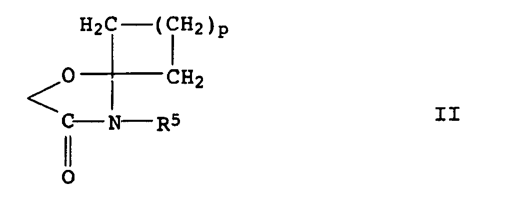 or the formula III 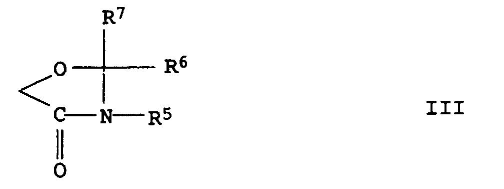 or of the formula IV 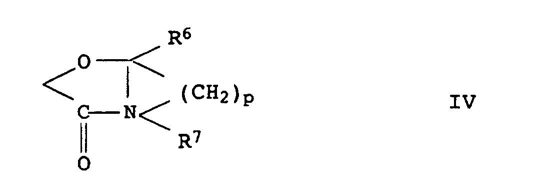 where
R⁵ is hydrogen, C₁-C₁₂-alkyl or -(CH₂)ₙ-COOR⁸,
R⁶,R⁷ and R⁸ independently of each other are C₁-C₁₈-alkyl or H, and
n and p independently of each other are an integer from 1 to 12.

3. An aqueous dispersion as claimed in claim 2, wherein the stabilizer is a compound of the formula

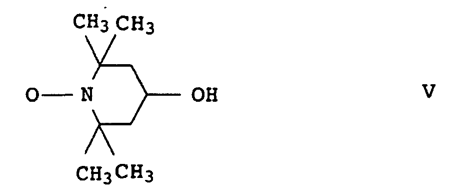

4. An aqueous dispersion as claimed in any of claims 1 to 3, containing from 0.001 to 0.5 % by weight of stabilizer, based on the compounds.

5. An aqueous dispersion as claimed in one of claims 1 to 4, wherein the content of ethylenically unsaturated groups in the polyurethanes is from 0.005 to 0.4 mol per 100 g of polyurethane.

6. An aqueous dispersion as claimed in any of the preceding claims, wherein the polyurethanes having copolymerizable ethylenically unsaturated groups are polyurethane (meth)acrylates.

7. The use of a stabilizer which contains at least one piperidine-N-oxyl group that is 2,2,6,6-tetrasubstituted by a C₁-C₆ hydrocarbon group for stabilizing aqueous dispersions of polyurethanes having copolymerizable ethylenically unsaturated groups.

## Revendications

1. Dispersions aqueuses de polyuréthannes comprenant des groupes à insaturation éthylénique copolymérisables, contenant un stabilisant qui comprend au moins un groupe N-oxyde de pipéridine tétrasubstitué par un groupe hydrocarboné en C₁ à C₆ en positions 2,2,6,6.

2. Dispersion aqueuse selon la revendication 1, **caractérisée en ce que** le stabilisant est un composé ou un mélange de composés de formule générale I 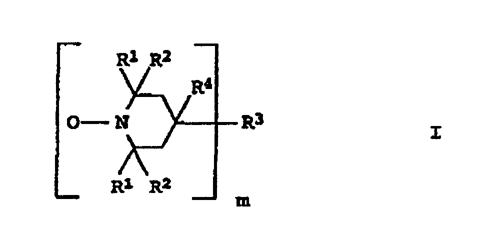 dans laquelle
m est un nombre entier de 1 à 100,
R¹, R² : représentent un groupe alkyle en C₁ à C₄, phényle ou, conjointement avec l'atome de C auquel ils sont liés, un cycle hydrocarboné saturé à 5 ou 6 éléments,
R³ : représente un atome d'hydrogène, un groupe hydroxyle, un groupe amino primaire ou un groupe organique m-valent lié par l'intermédiaire d'un atome d'oxygène ou d'azote ,
R⁴ : représente un atome d'hydrogène, un groupe alkyle en C₁ à C₁₂ ou un groupe alcoxy en C₁ à C₁₂
ou
m = 1 et
R³ et R⁴ représentent conjointement un groupe céto (=O) ou
R³ et R⁴ représentent, conjointement avec l'atome de C auquel ils sont liés, une structure cyclique de formule II 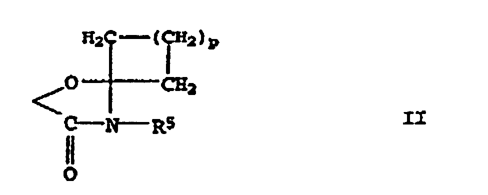 ou de formule III 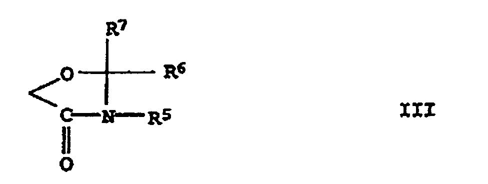 ou de formule IV 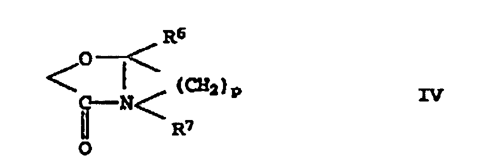 dans lesquelles
R⁵ représente un atome d'hydrogène, un groupe alkyle en C₁ à C₁₂ ou -(CH₂)ₙ, -COOR⁸,
R⁶, R⁷, R⁸ représentent, indépendamment les uns des autres, un groupe alkyle en C₁ à C₁₈ ou un atome d'hydrogène,
n, p représentent, indépendamment l'un de l'autre, un nombre entier de 1 à 12.

3. Dispersion aqueuse selon la revendication 2, **caractérisée en ce que** le stabilisant est un composé de formule

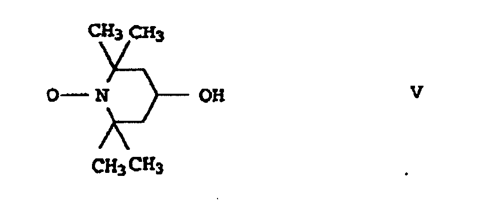

4. Dispersions aqueuses selon l'une quelconque des revendications 1 à 3, contenant 0,001% à 0,5% en poids du stabilisant par rapport aux composés.

5. Dispersions aqueuses selon l'une quelconque des revendications 1 à 4, dans lesquelles la teneur en groupes à insaturation éthylénique dans les polyuréthannes va de 0,005 mole à 0,4 mole pour 100 g de polyuréthanne.

6. Dispesions aqueuses selon l'une quelconque des revendications précédentes, dans lequelles les polyuréthannes comprenant des groupes à insaturation éthylénique copolymérisables sont des (méth)acrylates de polyuréthanne.

7. Utilisation d'un stabilisant qui comprend au moins un groupe N-oxyde de pipéridine tétrasubstitué par un groupe hydrocarboné en C₁ à C₆ en positions 2,2,6,6, afin de stabiliser des dispersions aqueuses de polyuréthannes comprenant des groupes à insaturation éthylénique copolymérisables.
